(19) Europäisches Patentamt
European Patent Office
Office européen des brevets

(11) EP 1 484 631 A1

(12) DEMANDE DE BREVET EUROPEEN

(43) Date de publication:
08.12.2004 Bulletin 2004/50

(51) Int Cl.7: G02F 1/017, G02F 1/01,
H04B 10/155

(21) Numéro de dépôt: 04291368.1

(22) Date de dépôt: 01.06.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(30) Priorité: 03.06.2003 FR 0306662

(71) Demandeur: ALCATEL
75008 Paris (FR)

(72) Inventeurs:
• Lefevre, René
78160 Marly Le Roy (FR)
• Pecci, Pascal
91380 Chilly-Mazarin (FR)

(74) Mandataire: Fournier, Michel et al
Compagnie Financière Alcatel,
Intellectual Property Department,
5, rue Noel Pons
92734 Nanterre Cedex (FR)

(54) **Dispositif optoélectronique intégré comportant un modulateur à électroabsorption et un élément électronique de commande du modulateur**

(57) La présente invention concerne un dispositif optoélectronique intégré (100) comportant un modulateur à électroabsorption (10) apte à délivrer un signal optique modulé de sortie porteur de données ($S_f$) et un élément électronique de commande (20) apte à piloter ledit modulateur. Le modulateur (10) comporte une pluralité de sections de modulation (11, 12, 13) couplées optiquement et ayant chacune une électrode (1, 2, 3), chacune desdites sections de modulation étant apte à recevoir un signal optique fourni par la section de modulation adjacente disposée en amont par rapport au sens de propagation optique (Z). L'élément électronique de commande (20) comporte des moyens d'amplification électrique distribuée (22, 23, 24) aptes à délivrer à chacune desdites sections de modulation un signal électrique modulé amplifié (V1, V2, V3), dit de commande, et une ligne de propagation électrique (21) pour lesdits signaux de commande qui est munie d'une pluralité de tronçons dont certains, dits tronçons électrodes, correspondent auxdites électrodes (1, 2, 3).

FIG_1

EP 1 484 631 A1

**Description**

L'invention concerne le domaine des transmission de données à haut débit sur fibres optiques et plus particulièrement porte sur un dispositif optoélectronique intégré comportant un modulateur à électroabsorption apte à délivrer un signal optique modulé de sortie porteur de données, et un élément électronique de commande apte à piloter ledit modulateur.

De manière connue, pour fabriquer des sources de signaux optiques modulés porteurs de données, par exemple émettant à 1,55 μm, on peut utiliser un laser continu suivi d'un modulateur externe tel qu'un modulateur à électroabsorption (EAM pour "electrabsorption modulator" en anglais), commandé par une source en tension réalisée avec un transistor par exemple.

Pour fonctionner à haut débit, de nombreuses recherches sont actuellement menées en particulier afin de réaliser une intégration du transistor de commande et du modulateur externe qui doivent être adaptés l'un à l'autre.

Par ailleurs, il existe deux types de modulateurs à électroabsorption les modulateurs discrets et ceux à ondes progressives.

Concernant les modulateurs discret, la fréquence de coupure est donnée par la relation :

$$f_c = 1/(2\pi(R_S+R_L)C_m).$$

Avec $R_s$, la résistance série du modulateur,
$R_L \approx 50\ \Omega$, l'impédance de la source de commande,
$C_m$ la capacité du modulateur.

Actuellement, un modulateur discret fonctionne correctement à 40 GHz, avec une longueur d'environ 100 μm, une capacité $C_m$ d'environ 70 fF et une résistance série $R_s$ d'environ 5 Ω.

La fréquence de coupure est d'autant plus grande que la longueur de l'électrode est faible. Pour fonctionner à haut débit, par exemple à 80 ou 160 Gbit/s, il serait donc nécessaire de réduire drastiquement cette longueur, à épaisseur de zone intrinsèque et largeur de guide données. Toutefois, la réduction de la longueur s'accompagne d'une diminution de l'efficacité optique traduite par un faible taux d'extinction, et nécessite des tensions de commande nécessaires très élevées, la distance d'interaction optique/électrique n'étant plus suffisante.

Le modulateur à électroabsorption à ondes progressives (TWEAM pour "travelling waves electrabsorption modulator" en anglais) est quant à lui caractérisé par son électrode répartie de sorte qu'il y a double propagation: la propagation de la lumière guidée et la propagation d'une onde électrique. Lors de leur copropagation, il y a transfert de l'énergie de modulation du signal électrique au signal optique. On considère que cette double propagation existe lorsque le temps de propagation n'est pas négligeable par rapport au temps de montée d'un bit autrement dit lorsque la longueur de l'électrode répartie n'est pas négligeable par rapport à la longueur d'onde des différentes composantes du signal de modulation.

Les modulateurs à électro-absorption à ondes progressives sont en technologie à base de niobiate de lithium ou plus récemment, comme les modulateurs discrets, en technologie à base de matériaux semi-conducteurs III-V, de type InGaAsP. Ces matériaux semi-conducteurs ont une tension de commande, donc une consommation plus faible et les modulateurs réalisés sont moins encombrants.

En distribuant la capacité le long d'une ligne de propagation, les modulateurs à ondes progressives permettent théoriquement de s'affranchir du problème de la limitation en bande passante électrique.

Toutefois, les pertes de l'onde électrique lors de sa propagation le long de l'électrode sont importantes et imposent une longueur limite pour une bande passante fixée. De plus, l'impédance caractéristique de la ligne de propagation du modulateur est généralement trop faible par rapport à celle du transistor de commande, ce qui limite la puissance électrique transmise au modulateur. Le gain en tension est trop faible à haute fréquence.

Les modulateurs à électro-absorption discrets comme à ondes progressives ne sont donc pas performants au-delà de 40 GHz.

L'objet de l'invention est de fournir un dispositif optoélectronique intégré comportant un modulateur à électro-absorption peu encombrant, peu consommateur, fonctionnant à haut débit et produisant un ou des signaux optiques modulés ayant un taux d'extinction et une puissance optique satisfaisants.

L'invention propose à cet effet un dispositif optoélectronique intégré comportant :

- un modulateur à électroabsorption apte à délivrer un signal optique modulé de sortie porteur de données,
- un élément électronique de commande apte à piloter ledit modulateur,

caractérisé en ce que le modulateur comporte une pluralité de sections de modulation couplées optiquement et ayant chacune une électrode, chacune des sections de modulation étant apte à recevoir un signal optique fourni par la section de modulation adjacente disposée en amont par rapport au sens de propagation optique,
et en ce que l'élément électronique de commande comporte :

- des moyens d'amplification électrique distribuée aptes à délivrer à chacune desdites sections de modulation un signal électrique modulé amplifié, dit de commande,

- une ligne de propagation électrique, pour lesdits signaux de commande, qui est munie d'une pluralité de tronçons dont certains, dits tronçons électrodes, correspondent auxdites électrodes.

Il n'y a pas de contraintes sur le nombre de sections de modulations et donc sur la longueur totale du modulateur selon l'invention. Le modulateur à électroabsorption selon l'invention est distribué tout comme l'amplification électrique est distribuée : chaque section de modulation, à électroabsorption, participe à la génération d'un signal optique modulé qui, en sortie, présente un taux d'extinction (en dB) correspondant à la somme des taux d'extinction des sections.

L'élément électronique de commande selon l'invention, ou driver, est choisi rapide et présente un gain total en tension élevé. Cet élément est capable de fournir des signaux de commande, par exemple des tensions de commande, de niveau crête à crête suffisant et ajustée pour chaque section de modulation.

Les moyens d'amplification électrique distribuée sont tels que le signal de commande de la section de modulation la plus en amont, qui reçoit un signal optique d'entrée continu, est d'intensité plus faible que le signal de commande de la section de modulation la plus en aval.

L'intégration de tronçons de la ligne de propagation électrique dans les sections de modulations réduit le désaccord d'impédance entre l'élément électronique et le modulateur optique et donc augmente le gain transducique.

Avantageusement, au moins l'une desdites sections de modulation recevant un signal optique d'entrée modulé, certains desdits tronçons sont des moyens d'ajustement de phase de façon à mettre en phase, au niveau d'au moins ladite section, le signal de commande avec ledit signal optique d'entrée modulé, pour éviter tout brouillage de données.

De préférence, entre deux sections de modulation adjacentes peut être intercalé un amplificateur optique, de préférence à semi-conducteurs, de façon à compenser les pertes optiques.

Dans un mode de réalisation préféré, les sections de modulation peuvent être chacune à onde progressive.

Les moyens d'amplification électrique distribuée peuvent comprendre une pluralité de transistors à grande mobilité d'électrons et de préférence des transistors bipolaires à hétérojonction ou des transistors à effet de champ tels que les 'HEMT (HEMT en anglais pour high electron mobility transistor). Lesdits transistors sont connectés à une même autre ligne de propagation électrique qui est apte à véhiculer un signal électrique modulé, par exemple issu d'un multiplexeur temporel.

Les sections de modulation peuvent être alignées et la ligne de propagation électrique pour les signaux de commande peut avoir une forme de type créneau et comprendre de préférence en entrée et en sortie des moyens d'adaptation d'impédance.

En outre, l'impédance de la ligne de propagation électrique pour les signaux de commande peut ainsi être facilement ajustée et réduite si nécessaire.

Le dispositif optoélectronique peut comprendre une source d'au moins un signal optique continu, disposée en amont dudit modulateur par rapport au sens de propagation optique, telle qu'une source laser, ainsi qu'un guide d'onde optique disposé en aval dudit modulateur par rapport au sens de propagation optique.

Dans un premier mode de réalisation de l'invention, le dispositif optoélectronique est monolithique et de préférence réalisé sur un substrat à base de phosphure d'indium pour une grande compacité.

Dans un deuxième mode de réalisation de l'invention, le modulateur à électroabsorption est réalisé sur un substrat à base de phosphure d'indium, tandis que l'élément électronique de commande est hybride et est réalisé en partie sur un substrat distinct à base d'arséniure de gallium ou de phosphure d'indium. Et certains des tronçons, dits d'interconnexions, sont choisis parmi les rubans d'or, les fils d'or et les autres éléments conducteurs flexibles.

L'invention s'applique naturellement à tout système de transmission incorporant le dispositif optoélectronique intégré tel que défini précédemment.

Les particularités et avantages de l'invention apparaîtront clairement à la lecture de la description qui suit, faite à titre d'un exemple illustratif et non limitatif et faite en référence aux figures annexées parmi lesquelles :

- la figure 1 représente schématiquement une vue de dessus d'un dispositif optoélectronique intégré, dans un mode de réalisation préféré de l'invention,
- la figure 2 représente schématiquement une vue partielle, en coupe latérale du dispositif optoélectronique intégré de la figure 1.

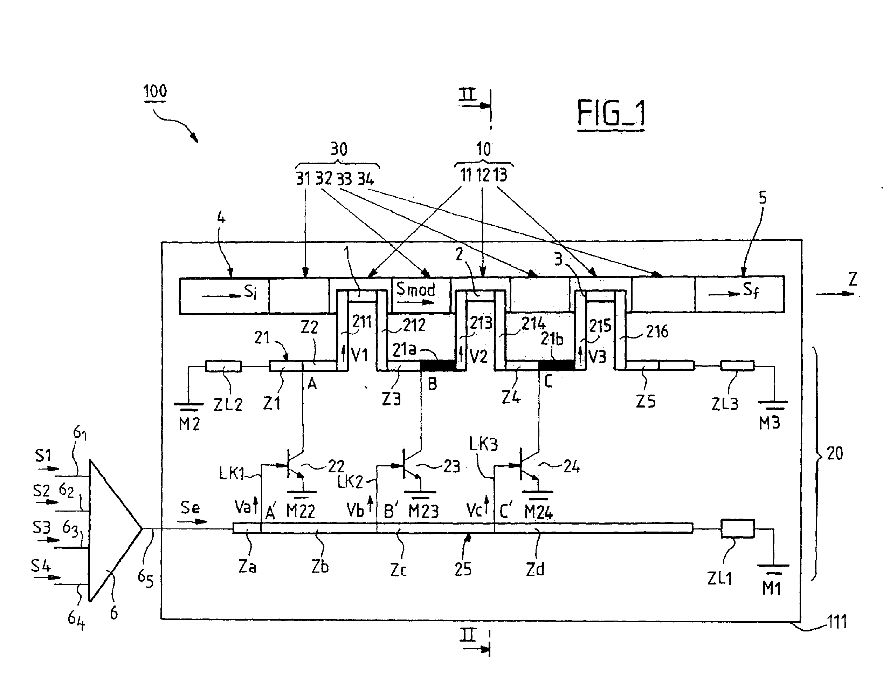

On voit en figure 1 une vue de dessus qui n'est pas à l'échelle d'un dispositif optoélectronique intégré 100, dans un mode de réalisation préféré de l'invention,

Le dispositif optoélectronique 100 est une source intégrée d'au moins un signal optique modulé à haut débit insérable dans un système de transmission (non représenté) par exemple contenant une fibre optique de transmission.

Le dispositif 100 est de préférence monolithique et réalisé sur un substrat 111 en phosphure d'indium InP.

Le dispositif 100 est conçu pour fonctionner à haut débit par exemple à 160 GHz, soit une longueur d'onde de modulation de 300 µm.

Le dispositif optoélectronique intégré 100 comporte :

- un modulateur à électroabsorption 10 qui comprend par exemple des première, deuxième, et troisième sections de modulation à électroabsorption 11, 12, 13 couplées optiquement et de préférence alignées et à ondes progressives, chaque section comportant une électrode 1 ,2, 3 respectivement,

- un élément électronique de commande 20 du modulateur, dit driver, qui est composé d'une ligne de propagation électrique 21, dite première ligne électrique, d'un ensemble de moyens d'amplification électrique distribuée 22, 23, 24, et dans cet exemple d'une deuxième ligne électrique 25,

- de préférence une source continue par exemple un laser monomode longitudinal et transverse 4, émettant par exemple à 1,55 μm ou à une ou d'autres longueurs d'onde dans les bandes de transmission C ou L, cette source 4 étant disposée en amont du modulateur 10 par rapport au sens de propagation optique, repéré par l'axe Z,

- de préférence un guide optique de sortie 5, disposée en aval du modulateur 10 par rapport au sens de propagation optique Z,

- de préférence une série 30 de quatre amplificateurs optiques 31 à 34 de préférence à semi-conducteurs et long d'environ 800 μm chacun, respectivement intercalés, entre la source laser continue 4 et la première section de modulation 11, entre les première et deuxième sections de modulations 11 et 12, entre les deuxième et troisième sections de modulations 12 et 13, et entre la troisième section de modulation 13 et le guide optique de sortie 5.

Dans cet exemple, chaque électrode 1, 2, 3 est répartie et de longueur choisie inférieure ou égale à 300 μm pour former une ligne de transmission. L'ensemble de moyens d'amplification électrique distribuée est formé de trois d'amplificateurs électriques 22, 23, 24, chacun étant composé d'un transistor à grande mobilité d'électrons, par exemple de préférence bipolaire à hétérojonction. Chaque émetteur est relié à une masse M22, M23, M24.

Dans une variante (non représentée), chacun des transistors bipolaires à hétérojonction 22à 24 et suivi d'un deuxième transistor bipolaire à hétérojonction monté en 'cascode' pour fournir un signal de commande de meilleure qualité.

Par ailleurs les transistors 22 à 24 peuvent aussi bien être à effet de champ.

Les transistors 22 à 24 sont connectés par leur collecteur à des points distincts A; B; C de la première ligne de électrique 21 qui correspond ainsi à une ligne de sortie.

Cette première ligne électrique 21, sensiblement de forme en créneau notamment pour un gain en compacité, comprend une pluralité de tronçons, par exemple seize, entre une impédance d'entrée d'adaptation de ligne ZL2 reliée à une masse M2 et une impédance de sortie d'adaptation de ligne ZL3 reliée à une masse M3. Ces impédances ZL2, ZL3 peuvent être distincte de 50 Ω.

La première ligne électrique 21 comprend ainsi :

- cinq tronçons référencés par leurs impédances Z1 à Z5,
- six tronçons dits d'interconnexions 211 à 216, deux par section de modulation,
- deux tronçons 21 a, 21 b qui sont des moyens d'ajustement de phase électrique (représentés en noir),
- et trois tronçons électrodes c'est-à-dire correspondant aux électrodes 1 à 3.

Les impédances sont ajustées par le choix de la largeur, par exemple égale à 20 μm, et de la longueur et sont par exemple des inductances valant environ 100 nH/m.

Les bases des transistors 22 à 24 sont en outre connectés par des liaisons LK1 à LK3 à des points distincts A', B', C' de la deuxième ligne de électrique 25 qui correspond ainsi à une ligne d'entrée.

La deuxième ligne électrique 25 est ainsi divisée en quatre tronçons référencés par leurs impédances Za à Zd chacune étant ajustée par le choix de la largeur, de préférence égale à 10 μm, et de la longueur. Les impédances Za à Zd correspondent par exemple à des inductances de l'ordre de 250 nH/m.

Cette deuxième ligne électrique 25 est elle-même connectée en entrée à une unique branche de sortie $6_5$ d'un multiplexeur électrique temporel 6 à quatre branches d'entrée $6_1$ à $6_4$ et en sortie à une résistance de charge ZL1, par exemple égale à 50 Ω ou moins, reliée à une masse M1.

En fonctionnement, quatre signaux électriques modulés à 40 Gbit/s S1 à S4 sont entrelacés temporellement au moyen du multiplexeur électrique 6 qui délivre en sortie $6_5$ un signal électrique modulé Se à 160 Gbit/s, de l'ordre de 0,5 V, qui se propage dans la deuxième ligne électrique 25.

Les transistors 22 à 24 sont alimentés en tension Va, Vb, Vc à partir de la deuxième ligne électrique 25 et fournissent des signaux électriques modulés amplifiés qui sont des courants de commande qui engendrent des tensions de commande V1, V2, V3 se propageant dans la première ligne électrique 21.

A l'entrée de la première section de modulation 11 on obtient une tension de commande V1 ayant une valeur crête à crête choisie égale à 0,5 V environ.

A l'entrée de la deuxième section de modulation 12, la tension de commande V2 est choisie en fonction des pertes de même que la tension de commande V3 à l'entrée de la troisième section de modulation 13.

Parallèlement, un signal optique continu $S_i$ de puissance par exemple égale à 1 W environ est généré par la source laser 4 et amplifié par l'amplificateur 31. Dans la première section de modulation 11, ce signal $S_i$ est modulé à un débit de 160 Gbit/s par la tension de commande V1 appliquée à l'électrode 1. Le taux d'extinction est de l'ordre de 6 dB.

Le signal optique modulé $S_{mod}$ est ensuite amplifié par l'amplificateur 32 et injecté dans la deuxième section de modulation 12. La modulation est renforcée par la tension de commande V2 en phase avec ce signal optique modulé, grâce au tronçon 21 a. Le taux d'extinction est de l'ordre de 13 dB.

Après un passage dans les amplificateurs 33, 34 et la troisième section de modulation 13, on obtient en sortie du guide 5 un signal modulé haut débit $S_f$ de puissance de l'ordre de 0 dBm au minimum et de taux d'extinction égal à 13 dB au minimum.

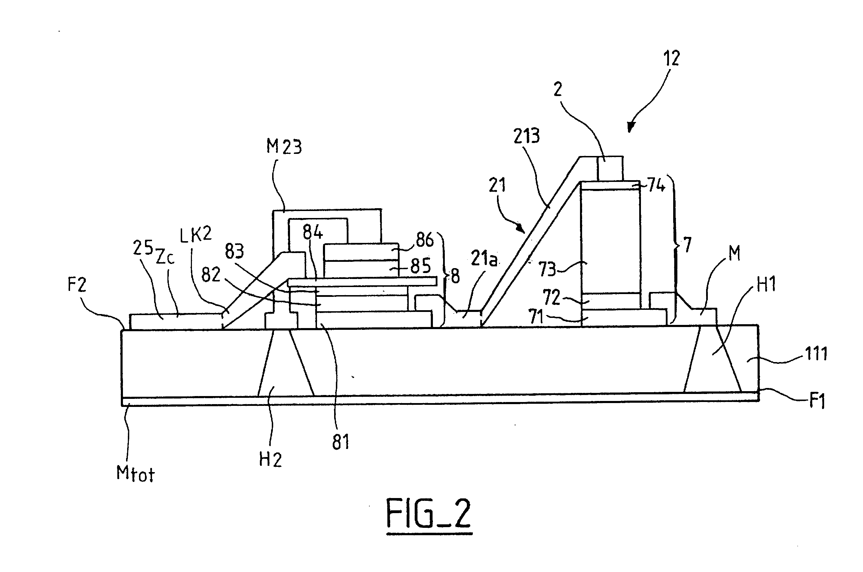

La figure 2 représente schématiquement une vue partielle, en coupe latérale selon l'axe II, qui n'est pas à l'échelle, du dispositif optoélectronique intégré 100.

La coupe est réalisée au niveau de la deuxième section de modulation 12, à titre d'exemple.

La section de modulation 12 comporte une structure verticale 7 qui est un empilement de couches épitaxiées réalisé sur la face dite supérieure F1 du substrat 111.

La structure verticale 7 comprend ainsi :

- une couche inférieure 71 en InP dopée p connectée à un plan de masse Mtot sous la face inférieure F2 du substrat 11 via une reprise de masse M et un trou métallisé H1 réalisé dans le substrat 111,
- une autre couche 72 en InP dopée p,
- une couche active 73 par exemple à puits quantiques en InGaAsP,
- et une couche de contact 74 en InGaAs dopée n.

Au-dessus de cette structure est formé le tronçon électrode 2 par exemple une multicouche titane, platine et or de 2 µm d'épaisseur.

Le transistor bipolaire 23 est composé de l'empilement 8 des couches suivant :

- une couche 81 d'InGaAs dopé n- recouverte d'une couche 82 d'InP dopé n+ recouverte d'une couche 83 d'InGaAsP, ces trois couches formant le collecteur,
- une couche 84 en InGaAsP formant la base, couche plus large déposée aux extrémités sur un matériau isolant tel que le polyimide (non représenté),
- et une couche 85 d'InP dopé n recouverte d'une couche 86 d'InGaAs dopé n+ et relié au plan de masse Mtot via une reprise de masse M23 et un trou métallisé H2 réalisé dans le substrat 111, ces couches formant l'émetteur.

La deuxième ligne électrique 21, par exemple une multicouche titane, platine et or de 2 µm d'épaisseur, est connectée par les tronçons d'interconnexions 213 au tronçon électrode 2.

La première ligne de électrique 25 par exemple une multicouche titane, platine et or de 2 µm d'épaisseur est connectée par la liaison LK2 à la base du transistor 23.

Ainsi, dans cette configuration présentée, la liaison LK2 et les tronçons d'interconnexions 213, sont également une multicouche titane, platine et or formée par exemple sur un matériau isolant tel que le polyimide (non représenté).

Dans une variante (non représentée) de ce mode de réalisation, l'élément électronique de commande 20 est hybride pour une facilité de réalisation et est en partie réalisé sur un substrat distinct à base d'arséniure de gallium ou gallium ou de phosphure d'indium. Les tronçons interconnexions 211 à 216 sont alors choisis parmi des fils à base d'or, des rubans à base d'or et autres éléments conducteurs flexibles tel qu'un ruban de polyimide revêtu de cuivre.

La source continue 4, le modulateur à électroabsorption 30, la série 30 de quatre amplificateurs optiques et le guide optique de sortie 5 sont fabriqués sur le substrat 111 en phosphure d'indium InP.

Bien entendu, la description qui précède a été donnée à titre purement illustratif. On pourra sans sortir du cadre de l'invention remplacer tout moyen par un moyen équivalent.

Le nombre de sections de modulation peut aussi bien être supérieure à deux. Leur longueur est ajustée en fonction des performances souhaitées.

## Revendications

**1.** Dispositif optoélectronique intégré (100) comportant :

- un modulateur à électroabsorption (10) apte à délivrer un signal optique modulé de sortie porteur de données ($S_f$),
- un élément électronique de commande (20) apte à piloter ledit modulateur,

**caractérisé en ce que** le modulateur (10) comporte une pluralité de sections de modulation (11, 12, 13) couplées optiquement et ayant chacune une électrode (1, 2, 3), chacune desdites sections de modulation étant apte à recevoir un signal optique fourni par la section de modulation adjacente disposée en amont par rapport au sens de propagation optique (Z),

et **en ce que** l'élément électronique de commande (20) comporte :

- des moyens d'amplification électrique distribuée (22, 23, 24) aptes à délivrer à chacune desdites sections de modulation un signal électrique modulé amplifié (V1 ,V2, V3), dit de commande,
- une ligne de propagation électrique (21), pour lesdits signaux de commande, qui est munie d'une pluralité de tronçons dont certains, dits tronçons électrodes, correspondent auxdites électrodes (1, 2, 3).

**2.** Dispositif optoélectronique intégré (100) selon la revendication 1 **caractérisé en ce que**, au moins l'une desdites sections de modulation (12, 13) recevant un signal optique d'entrée modulé ($S_{mod}$), certains desdits tronçons (21 a, 21 b) sont des moyens d'ajustement de phase de façon à mettre en phase, au niveau d'au moins ladite section de modulation, le signal de commande avec ledit signal optique d'entrée modulé.

**3.** Dispositif optoélectronique intégré (100) selon l'une des revendications 1 ou 2 **caractérisé en ce qu'**entre deux sections de modulation adjacentes (11, 12, 13) est intercalé un amplificateur optique (32, 33).

**4.** Dispositif optoélectronique intégré (100) selon l'une des revendications 1 à 3 **caractérisé en ce que** les sections de modulation (11, 12, 13) sont chacune à onde progressive.

**5.** Dispositif optoélectronique intégré (100) selon l'une des revendications 1 à 4 **caractérisé en ce que** les moyens d'amplification électrique distribuée (22, 23, 24) comprennent une pluralité de transistors à grande mobilité d'électrons (22a à 24b), lesdits transistors étant connectés en entrée à une même autre ligne de propagation électrique (25) apte à véhiculer un signal électrique modulé (Se).

**6.** Dispositif optoélectronique intégré (100) selon l'une des revendications 1 à 5 **caractérisé en ce que** les sections de modulations (11, 12, 13) sont alignées et ladite ligne de propagation électrique (21) a une forme de type créneau.

**7.** Dispositif optoélectronique intégré (100) selon l'une des revendications 1 à 6 **caractérisé en ce qu'**il comprend une source d'au moins un signal optique continu (4) disposée en amont dudit modulateur (10) par rapport au sens de propagation optique (Z) ainsi qu'un guide d'onde optique (5) disposé en aval dudit modulateur par rapport au sens de propagation optique.

**8.** Dispositif optoélectronique intégré (100) selon l'une des revendications 1 à 7 **caractérisé en ce qu'**il est monolithique.

**9.** Dispositif optoélectronique intégré selon l'une des revendications 1 à 7 **caractérisé en ce que** le modulateur à électroabsorption est réalisé sur un substrat à base de phosphure d'indium et **en ce que**, l'élément électronique de commande étant hybride, ledit élément est en partie réalisé sur un substrat distinct à base d'arséniure de gallium ou de phosphure d'indium et certains desdits tronçons, dits interconnexions, sont choisis parmi les fils à base d'or, les rubans à base d'or et les autres éléments conducteurs flexibles.

**10.** Système de transmission incorporant le dispositif optoélectronique intégré (100) selon l'une des revendications 1 à 9.

FIG_1

100

II

30
31 32 33 34

10
11 12 13

4   $S_i$   $S_{mod}$   5   Z

1   2   3

211   212   213   214   215   216

21   Z2   V1   21a   V2   21b   V3

ZL2   Z1   A   Z3   B   Z4   C   Z5   ZL3

M2   M3

LK3

22   23   24
LK1   LK2

$S_1$ $6_1$
$S_2$ $6_2$
$S_3$ $6_3$
$S_4$

Se   Va   A'   M22   Vb   B'   M23   Vc   C'   M24

Za   Zb   Zc   25   Zd   ZL1

$6_4$   6   $6_5$   M1

20

111

7

FIG_2

EP 1 484 631 A1

**EP 1 484 631 A1**

**Office européen des brevets**

**RAPPORT DE RECHERCHE EUROPEENNE**

Numéro de la demande

EP 04 29 1368

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 03/013031 A (IRMSCHER STEFAN ;LEWEN ROBERT (SE); OPTILLION AB (SE); WESTERGREN) 13 février 2003 (2003-02-13) * le document en entier * | 1,2,4,5, 7-10 | G02F1/017 G02F1/01 H04B10/155 |
| A | EP 0 741 316 A (KOKUSAI DENSHIN DENWA CO LTD) 6 novembre 1996 (1996-11-06) * figures 2A,3A,9 * | 1,2,4,7, 8,10 | |
| A | US 6 529 646 B1 (STEWART WILLIAM J ET AL) 4 mars 2003 (2003-03-04) * colonne 2, ligne 67 - colonne 3, ligne 6 * | 1 | |
| A | LIAO H H ET AL: "DESIGN OF MILLIMETER WAVE OPTICAL MODULATORS WITH MONOLITHICALLY INTEGRATED NARROW BAND IMPEDANCE MATCHING CIRCUITS FOR 1.3MUM PHOTONIC LINKS" PROCEEDINGS OF THE SPIE, SPIE, BELLINGHAM, VA, US, vol. 2844, août 1996 (1996-08), pages 97-107, XP000889754 ISSN: 0277-786X * alinéas [0001] - [0004]; figures 1,4,5 * | 1 | DOMAINES TECHNIQUES RECHERCHES (Int.Cl.7) G02F H04B |

Le présent rapport a été établi pour toutes les revendications

| Lieu de la recherche | Date d'achèvement de la recherche | Examinateur |
|---|---|---|
| Munich | 2 septembre 2004 | Noirard, P |

**ANNEXE AU RAPPORT DE RECHERCHE EUROPEENNE
RELATIF A LA DEMANDE DE BREVET EUROPEEN NO.**          EP 04 29 1368

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-09-2004

| Document brevet cité au rapport de recherche | | Date de publication | Membre(s) de la famille de brevet(s) | | Date de publication |
|---|---|---|---|---|---|
| WO 03013031 | A | 13-02-2003 | SE | 523350 C2 | 13-04-2004 |
| | | | SE | 0102646 A | 02-02-2003 |
| | | | WO | 03013031 A1 | 13-02-2003 |
| EP 0741316 | A | 06-11-1996 | EP | 0741316 A1 | 06-11-1996 |
| | | | CA | 2088330 A1 | 04-08-1993 |
| | | | CA | 2398045 A1 | 04-08-1993 |
| | | | DE | 69329208 D1 | 14-09-2000 |
| | | | DE | 69329208 T2 | 19-04-2001 |
| | | | DE | 69331167 D1 | 03-01-2002 |
| | | | DE | 69331167 T2 | 18-07-2002 |
| | | | EP | 0556974 A2 | 25-08-1993 |
| | | | JP | 2764845 B2 | 11-06-1998 |
| | | | JP | 5283804 A | 29-10-1993 |
| | | | US | 5394260 A | 28-02-1995 |
| | | | US | 5798856 A | 25-08-1998 |
| US 6529646 | B1 | 04-03-2003 | GB | 2347230 A | 30-08-2000 |
| | | | EP | 1071978 A1 | 31-01-2001 |
| | | | WO | 0050952 A1 | 31-08-2000 |
| | | | JP | 2002538494 A | 12-11-2002 |

EPO FORM P0460

Pour tout renseignement concernant cette annexe : voir Journal Officiel de l'Office européen des brevets, No.12/82